# EUROPÄISCHE PATENTSCHRIFT

(11) **EP 2 006 238 B1**
(45) Veröffentlichungstag und Bekanntmachung des Hinweises auf die Patenterteilung: **31.12.2014**
(21) Anmeldenummer: 08158021.9
(22) Anmeldetag: 11.06.2008
(51) Int. Cl.: B66D 5/08, F16D 66/02

(54) **Verfahren und Aufzugsantrieb mit einer Bremseinrichtung**
Method and lift drive with a braking device
Procédé et ascenseur doté d'un dispositif de freinage

(30) Priorität: 18.06.2007 EP 07110428
(43) Veröffentlichungstag der Anmeldung: 24.12.2008
(73) Patentinhaber: Inventio AG, 6052 Hergiswil (CH)
(72) Erfinder: Weinberger, Karl, 6405 Immensee (CH); Eckenstein, Rudolf, 6340 Baar (CH); Hermann, René, 6005 Luzern (CH); Bonnard, Luc, 6052 Hergiswil (CH)

(56) Entgegenhaltungen:
- EP-A- 1 101 971
- GB-A- 1 581 381
- US-A- 4 132 292
- US-A- 4 232 768

## Beschreibung

Die Erfindung betrifft ein Verfahren und einen Aufzugsantrieb mit einer Bremseinrichtung, bestehend aus Bremshebel mit einer Federkraft beaufschlagenden Druckfedern, wobei Bremsbeläge an einer Bremstrommel eine Bremskraft erzeugen und mindestens ein Bremsmagnet entgegen der Federkraft die Bremshebel lüftet gemäss der Definition der unabhängigen Patentansprüche.

US-A-4132292 offenbart einen Aufzugsantrieb gemäß dem Oberbegriff des Anspruchs 1.

Aus der Patentschrift EP 1 156 008 B1 ist eine Bremseinrichtung für eine Antriebsmaschine bekannt geworden. Die Bremseinrichtung besteht aus einem ersten Bremshebel und einem zweiten Bremshebel, an denen je eine auf eine Bremstrommel einwirkende Bremsbacke angeordnet ist. Die Bremshebel sind unten gelenkig an einem Lagerbock gelagert und oben an einer Stange geführt. Zur Betätigung der Bremsbacken ist je Bremshebel eine Druckfeder vorgesehen. Zum Lüften der Bremsbacken ist je Bremshebel ein Magnet vorgesehen, der entgegen der Druckfeder arbeitet. Die Magnete sind an einem Rahmen angeordnet, der mit dem Lagerbock verbunden ist. An der Innenseite eines jeden Magnetträgers ist ein Mikroschalter angeordnet. Ein Stössel des Mikroschalters wird mittels einer an einer Ankerscheibe angeordneten Nocke betätigt. Der Schaltzustand des Mikroschalters zeigt der Steuerung des Aufzuges an, ob die Bremse mittels der Druckferdern aktiviert oder mittels der Magnete gelöst ist.

Die Erfindung, wie sie in den unaghängingen Ansprüchen gekennzeichnet ist, löst die Aufgabe, ein Verfahren und einen Aufzugsantrieb mit einer sicher arbeitenden Bremseinrichtung zu schaffen, die für die Benutzer des Aufzuges gefährliche Zustände verhindert.

Vorteilhafte Weiterbildungen der Erfindung sind in den abhängigen Patentansprüchen angegeben.

Die durch die Erfindung erreichten Vorteile sind im wesentlichen darin zu sehen, dass nicht nur wie bisher die Lage der Bremshebel im durch den Bremsmagnet bewirkten, gelösten Zustand der Bremseinrichtung sondern auch die Endlage des Bremsmagnetstössels bzw. des Ankers des Bremsmagnets überwacht wird. Damit kann vermieden werden, dass durch allmählichen Abrieb der Bremsbeläge der Bremsmagnetstössel bzw. der Bremsmagnetanker am Bremsmagnetgehäuse anstehen kann und damit das Bremsvermögen der Bremseinrichtung vermindern oder im Extremfall aufheben kann. Der Aufzugsantrieb kann so direkt abgeschaltet werden, bevor die Bremse versagt bzw. bevor ein für die Benutzer des Aufzuges gefährlicher Zustand eintreten kann.

Weiter vorteilhaft ist der einfache Aufbau der Endlagenüberwachung, die beispielsweise mittels Grenzwertschalter, Mikroschalter oder Näherungsschalter realisierbar ist.

Mit der Erfindung lässt sich ein Aufzugsantrieb vorteilhaft bauen und auch ein bestehender Aufzugsantrieb vorteilhaft nachrüsten. Der Schalter kann im Bremsmagnetgehäuse oder ausserhalb angeordnet werden, wobei jeweils die Relativbewegung des Bremsmagnetstössels bzw. des Ankers gegenüber dem Bremsmagnetgehäuse erfasst wird.

Mit dem einfachen Aufbau der Endlagenüberwachung können bestehende Aufzugsanlagen mit der erfindungsgemässen Einrichtung ohne grossen Aufwand, beispielsweise durch Anbau des Schalters am Bremsmagnetstössel, nachgerüstet werden.

Bei dem erfindungsgemässen Aufzugsantrieb mit einer Bremseinrichtung, bestehend aus Bremshebel mit einer Federkraft beaufschlagenden Druckfedern, erzeugen Bremsbeläge an einer Bremstrommel eine Bremskraft und mindestens ein Bremsmagnet lüftet entgegen der Federkraft die Bremshebel, wobei mindestens ein Schalter vorgesehen ist, der eine minimale Distanz zwischen einem Anker des Bremsmagnets und einem Bremsmagnetgehäuse überwacht.

Anhand der beiliegenden Figuren wird die vorliegende Erfindung näher erläutert.

Es zeigen:
Fig. 1
   eine schematische Darstellung eines Aufzugsantriebs mit einer Bremseinrichtung mit zwei Druckfedern und einem Bremsmagnet,
Fig. 2
   eine schematische Darstellung eines Aufzugsantriebs mit einer Bremseinrichtung mit einem doppelten Bremsmagnet,
Fig. 3
   eine Ausführungsvariante eines Aufzugsantriebs mit einer Bremseinrichtung mit einer Druckfeder und einem Bremsmagnet,
Fig. 4
   Einzelheiten einer Verbindung eines Bremsmagnetstössels mit einem Bremshebel,
Fig. 5 und Fig. 6
   Einzelheiten eines auf den Bremsmagnetstössel aufgesetzten Schalters zur Überwachung der Stösselendlage,
Fig. 7
   ein elektrisches Schaltbild zur Steuerung der Antriebsmaschine in Abhängigkeit des Endlagenschalters und
Fig. 8
   ein elektrisches Schaltbild zur Steuerung der Antriebsmaschine in Abhängigkeit des Endlagenschalters und zur Steuerung des Aufzuges in Abhängigkeit eines Bremshebelschalters.

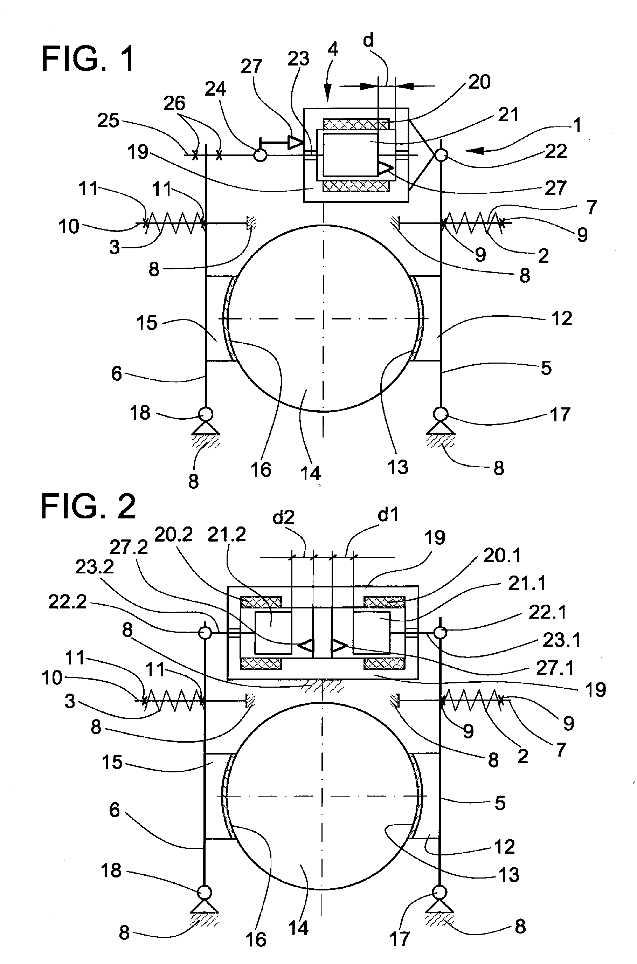

Fig. 1 zeigt eine schematische Darstellung einer Bremseinrichtung 1 mit einer ersten Druckfeder 2, einer zweiten Druckfeder 3, einem ersten Bremshebel 5, einem zweiten Bremshebel 6 und einem Bremsmagnet 4. Die erste Druckfeder 2 beaufschlagt den ersten Bremshebel 5 mit einer Federkraft. Die zweite Druckfeder 3 beaufschlagt den zweiten Bremshebel 6 mit einer Federkraft. Die erste Druckfeder 2 wird mittels einer ersten Stange 7 geführt, die einenends mit einem Maschinengehäuse 8 verbunden ist und anderenends ein erstes Justierelement 9 aufweist, beipielsweise auf Gewinde der Stange 7 aufgesetzte Muttern mit Gegenmuttern, wobei mit dem Justierelement 9 die Bremskraft und die Öffnung des ersten Bremshebels 5 einstellbar ist. Die zweite Druckfeder 3 wird mittels einer zweiten Stange 10 geführt, die einenends mit dem Maschinengehäuse 8 verbunden ist und anderenends ein zweites Justierelement 11 aufweist, beipielsweise auf Gewinde der Stange 10 aufgesetzte Muttern mit Gegenmuttern, wobei mit dem Justierelement 11 die Bremskraft und die Öffnung des zweiten Bremshebels 6 einstellbar ist. Am ersten Bremshebel 5 ist eine erste Bremsbacke 12 angeordnet, die einen ersten Bremsbelag 13 trägt, wobei der erste Bremsbelag 13 an einer Bremstrommel 14 eine Bremskraft erzeugt. Am zweiten Bremshebel 6 ist eine zweite Bremsbacke 15 angeordnet, die einen zweiten Bremsbelag 16 trägt, wobei der zweite Bremsbelag 16 an der Bremstrommel 14 eine Bremskraft erzeugt. Der erste Bremshebel 5 ist drehbar an einer ersten, am Maschinengehäuse 8 abgestützten Hebelachse 17 gelagert. Der zweite Bremshebel 6 ist drehbar an einer zweiten, am Maschinengehäuse 8 abgestützten Hebelachse 18 gelagert. Die Bremstrommel 14 ist üblicherweise mit einer nicht dargestellten Motorachse verbunden.

Der Bremsmagnet 4 besteht aus einer in einem Bremsmagnetgehäuse 19 angeordneten Magnetspule 20, die strombeaufschlagt mit ihrem Magnetfeld auf einen Anker 21 einwirkt, wobei das Bremsmagnetgehäuse 19 mit der Magnetspule 20 und der Anker 21 sich gegenseitig abstossen und der Federkraft der Druckfedern 2,3 entgegenwirken. Das Bremsmagnetgehäuse 19 ist an einem ersten Gelenk 22 mit dem ersten Bremshebel 5 verbunden. Der Anker 21 ist mit einem Bremsmagnetstössel 23 verbunden, der wiederum an einem zweiten Gelenk 24 mit einer dritten Stange 25 verbunden ist. Die dritte Stange 25 ist mittels dritten Justierelementen 26 mit dem zweiten Bremshebel 6 verbunden.

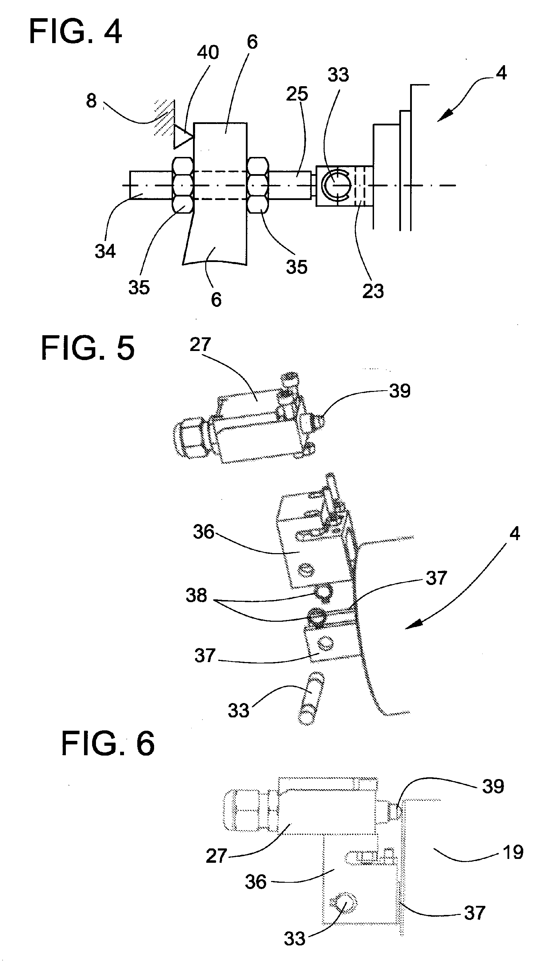

Je mehr sich die Bremsbeläge 13,16 durch Abrieb abnützen, umso kleiner wird die Distanz d des Ankers 21 zum Bremsmagnetgehäuse 19. Steht der Anker 21 am Bremsmagnetgehäuse an, wird das Bremsvermögen der Bremsbeläge 13,16 vollständig aufgehoben. Damit dieser für Aufzugsbenutzer gefährliche Betriebszustand nicht eintreten kann, ist mindestens ein Schalter 27 vorgesehen, der eine minimale Distanz d detektiert. Als Schalter 27 kann beispielsweise ein Grenzwertschalter oder ein Mikroschalter oder ein Näherungsschalter oder ein optischer Schalter vorgesehen sein. Der Schalter 27 kann am Anker 21 angeordnet sein und die minimale Distanz d zum Bremsmagnetgehäuse 19 detektieren. Der Schalter 27 kann auch am Bremsmagnetgehäuse 19 angeordnet sein und die minimale Distanz d zum Anker 21 detektieren. Der Schalter 27 kann auch am Bremsmagnetstössel 23 angeordnet sein und die Relativbewegung des Bremsmagnetstössels 23 gegenüber dem Bremsmagnetgehäuse 19 ausführen, wobei der Schalter 27 bei der minimalen Distanz d schaltet. Einzelheiten sind in den Figuren 4 bis 6 näher erläutert. Die Schalteranordnung gemäss Figuren 4 bis 6 wird bei einer Nachrüstung in bestehenden Aufzugsanlagen bevorzugt. Bei Neuanlagen wird üblicherweise ein Bremsmagnet 4 mit eingebautem Schalter 27 verwendet.

Fig. 2 zeigt eine schematische Darstellung einer Bremseinrichtung 1 mit einem doppelten Bremsmagnet 4 bestehend aus einer ersten Magnetspule 20.1, einer zweiten Magnetspule 20.2, einem ersten Anker 21.1, einem zweiten Anker 21.1, einem ersten Bremsmagnetstössel 23.1 und einem zweiten Bremsmagnetstössel 23.2. Der erste Bremsmagnetstössel 23.1 ist mit dem ersten Bremshebel 5 gelenkig (Gelenk 22.1) verbunden. Der zweite Bremsmagnetstössel 23.2 ist mit dem zweiten Bremshebel 6 gelenkig (Gelenk 22.2) verbunden. Das Bremsmagnetgehäuse 19 ist mit dem Maschinengehäuse 8 verbunden. Ein erster Schalter 27.1 überwacht die minimale Distanz d1 zwischen dem ersten Anker 21.1 und dem Bremsmagnetgehäuse 19. Ein zweiter Schalter 27.2 überwacht die minimale Distanz d2 zwischen dem zweiten Anker 21.2 und dem Bremsmagnetgehäuse 19. Der erste Schalter 27.1 kann auch am Gelenk 22.1 angeordnet sein. Der zweite Schalter 27.2 kann auch am Gelenk 22.2 angeordnet sein.

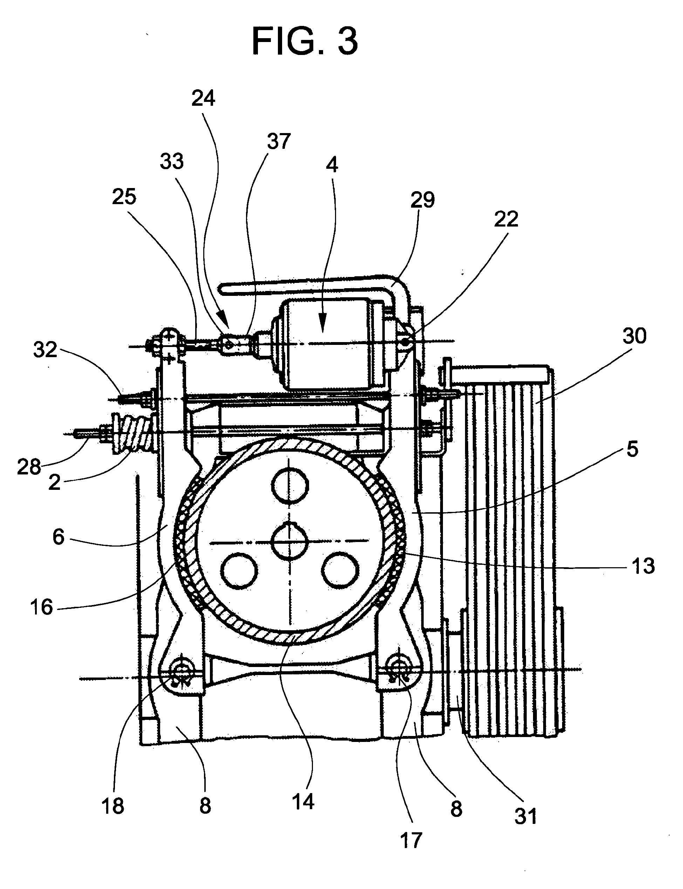

Fig. 3 zeigt eine Ausführungsvariante einer Bremseinrichtung 1 mit nur einer Druckfeder 3 und einem Bremsmagnet 4. Die Druckfeder 3 stützt sich ab am zweiten Bremshebel 6 und an einer vierten Stange 28, die anderenends mit dem ersten Bremshebel 5 verbunden ist. Die Druckfeder 3 beaufschlagt so die beiden Bremsbeläge 13,16 mit einer Federkraft. Der Bremsmagnet 4 arbeitet wie in Fig. 1 erläutert, wobei mindestens ein Schalter 27 im Bremsmagnet 4 eingebaut sein kann oder wie in den Fig. 4 bis 6 gezeigt am zweiten Gelenk 24 nachträglich angebaut werden kann. Der Bremsmagnet 4 arbeitet der Federkraft der Druckfeder 3 entgegen und löst die Bremsbeläge 13,16 von der Bremstrommel 14. Die Kraft des Bremsmagnets 4 kann auch manuell mittels eines Bremslüfthebels 29 erzeugt werden. Eine fünfte Stange 32 begrenzt die Auslenkung der Bremshebel 5,6 durch den Magnet 4 bzw. durch den Bremslüfthebel 29. Mit 30 ist eine an einer Getriebeausgangswelle 31 angeordnete Treibscheibe bezeichnet, über die Trag- und Treibmittel der Aufzugskabine bzw. des Gegengewichtes geführt sind.

Fig. 4 zeigt Einzelheiten der Verbindung des Bremsmagnetstössels 23 mit dem zweiten Bremshebel 6. Die dritte Stange 25 ist mittels eines den Bremsmagnetstössel 23 durchdringenden Bolzens 33 an den Bremsmagnetstössel 23 angelenkt. Am freien Ende der dritten Stange 25 ist ein Gewinde 34 vorgesehen, das zusammen mit Muttern 35 als drittes Justierelement 26 dient. Mindestens ein Bremshebelschalter 40 überwacht die Stellung der Bremshebel 5,6 bzw. ob die Bremshebel 5,6 und somit die Bremsbeläge 13,16 von der Bremstrommel 14 gelöst worden sind.

Fig. 5 und Fig. 6 zeigen Einzelheiten des mit dem Bremsmagnetstössel 23 verbundenen Schalters 27 zur Überwachung der Stösselendlage bzw. der minimalen Distanz d. Ein Adapter 36 wird auf das gabelförmige Ende 37 des Bremsmagnetstössels 23 aufgesetzt und mittels des Bolzens 33 festgemacht, wobei Federringe 38 den Bolzen beidseitig sichern. Der Schalter 27, im gezeigten Beispiel ein Grenzwertschalter 27 mit Tastkopf 39, wird vom Adapter 36 getragen. Wie in Fig. 6 gezeigt, erfasst der Tastkopf 39 die Relativbewegung des Bremsmagnetstössels 23 gegenüber dem Bremsmagnetgehäuse 19.

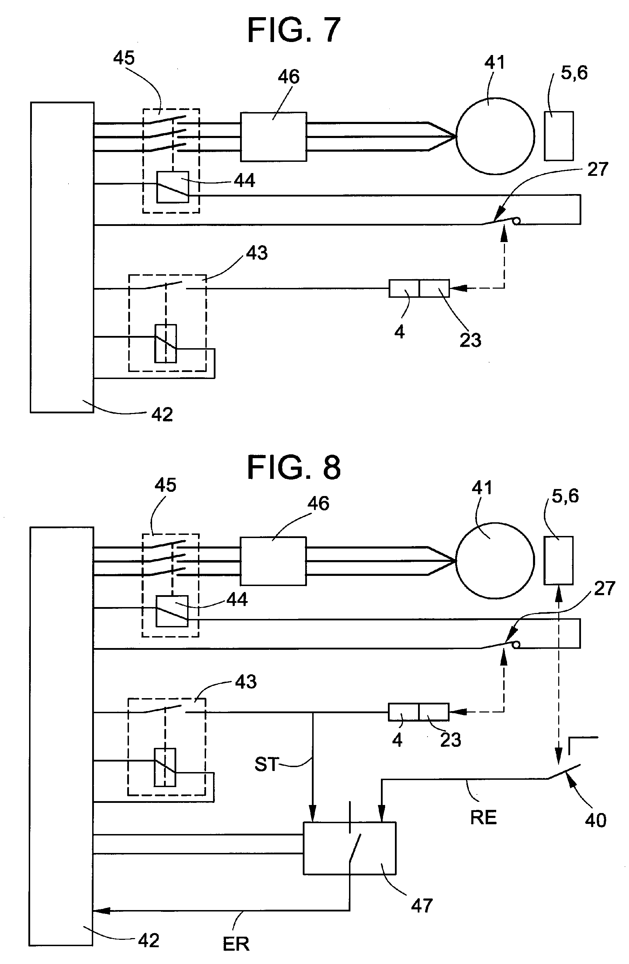

Fig. 7 zeigt ein elektrisches Schaltbild zur Steuerung der Antriebsmaschine bzw. eines die Treibscheibe 30 antreibenden Motors 41 in Abhängigkeit des Schalters 27. Eine Aufzugssteuerung 42 beaufschlagt bzw. steuert ein Bremsrelais 43 an, sobald die Aufzugskabine bereit ist zur Abfahrt. Das Bremsrelais 43 speist die Magnetspule 20 des Bremsmagnets 4, wobei die Bremshebel 5,6 gelüftet werden. Gleichzeitig beaufschlagt bzw. steuert die Aufzugssteuerung 42 ein Schalterrelais 44 an, das einen 3-poligen Motorschalter 45 einschaltet, womit ein Frequenzumrichter 46 gespeist wird und der Motor 41 und die Treibscheibe 30 in Bewegung versetzt wird. Der Schalter 27 zur Endlagenüberwachung des Bremsmagnetstössels 23 ist in den Speisekreis des Schalterrelais 44 geschaltet und ist im Normalfall wie gezeigt geschlossen. Falls der Bremsmagnetstössel 23 bzw. der Anker 21 wegen übermässig abgenutzter Bremsbeläge 13,16 den minimalen Abstand d zum Bremsmagnetgehäuse 19 unterschreitet, wird der Schalter 27 geöffnet und die Speisung des Schalterrelais 44 und somit die Speisung des Frequenzumrichters 46 unabhängig von der Aufzugssteuerung 42 unterbrochen. Der Motor 41 bleibt ausgeschaltet und kann ohne Intervention des Unterhaltspersonals nicht mehr eingeschaltet werden.

Die Bremsbeläge 13,16 können bei Aufzügen mit vielen Kurzfahrten bzw. vielen Stockwerkhalten schneller als üblich abgenutzt werden. Aufzüge, die im Stockwerkbereich mit der Bremse angehalten werden (sogenannte Feinabsteller), weisen eine höhere Abnutzung der Bremsbeläge auf. Aufgrund der nachlassenden Anhaltegenauigkeit der Aufzugskabine auf dem Stockwerk kann aber rechtzeitig auf einen mangelhaften Zustand der Bremse geschlossen werden. Bei Antrieben mit Regelung des Anhalteniveaus ist die Anhaltegenauigkeit immer gleich, ein mangelhafter Zustand der Bremse manifestiert sich nicht mehr sichtbar.

Eine weitere Ursache für übermässige Abnutzung der Bremsbeläge 13,14 kann mindestens ein teilweises Versagen der Magnetspule 20 sein, wobei die Magnetspule 20 nicht mehr die volle Kraft zum Lösen der Bremshebel 5,6 aufbringt und der Motor 41 die Treibscheibe 30 mit geschlossenen Bremshebeln 5,6 bewegt. Zur Vermeidung dieses Zustandes mit übermässiger Abnutzung der Bremsbeläge 13,16 ist wie in Fig. 4 gezeigt ein Bremshebelschalter 40 vorgesehen, der die Stellung der Bremshebel 5,6 bei, von der Aufzugssteuerung aus gesehen, gelüfteter Bremse überwacht und feststellt, ob bei einem Fahrbefehl die Bremshebel 5,6 und somit die Bremsbeläge 13,16 von der Bremstrommel 14 gelöst worden sind. Falls der Bremshebelschalter 40 nicht vorhanden ist oder von der Aufzugssteuerung nicht unterstützt wird, kann fahren ohne gelüftete Bremse nicht vermieden werden, der Schalter 27 erkennt und eliminiert aber dennoch ein totales Versagen der Bremse.

Fig. 8 zeigt das elektrische Schaltbild der Fig. 7 zur Steuerung des Motors 41 in Abhängigkeit des Schalters 27 und zur Steuerung des Aufzuges in Abhängigkeit des Bremshebelschalters 40. Ein vom Bremsrelais 43 erzeugtes Signal ST, das auch die Bremsmagnetspule 20 des Bremsmagnets 4 beaufschlagt, startet ein Schaltglied 47. Im Normalfall wirkt dann der Bremsmagnet 4 der Federkraft der Druckfedern 2,3 entgegen und der Bremshebelschalter 40 detektiert den Zustand der geöffneten bzw. der gelüfteten Bremshebel 5,6, wobei ein Signal RE das Zeitrelais zurücksetzt. Falls die Bremshebel 5,6 trotz beaufschlagtem Bremsmagnet 4 nicht gelüftet werden, erzeugt der Bremshebelschalter 40 das Signal RE nicht. Dadurch entsteht eine schaltlogische Ungleichheit zwischen den Signalen ST und RE. Ohne das Signal RE wird das Schaltglied 47 nicht zurückgesetzt und das Signal ER als Fehlermeldung an die Aufzugssteuerung 42 weitergeleitet, die in diesem Fall die Aufzugskabine bis zum nächsten Stockwerk fahren lässt und dann den Frequenzumrichter 46 abschaltet und die Türen öffnet.

## Patentansprüche

1. Aufzugsantrieb (41,46) mit einer Bremseinrichtung (1), bestehend aus Bremshebel (5,6) mit einer Federkraft beaufschlagenden Druckfedern (2,3), wobei Bremsbeläge (13,16) an einer Bremstrommel (14) eine Bremskraft erzeugen und mindestens ein Bremsmagnet (4) entgegen der Federkraft die Bremshebel (5,6) lüftet,
**dadurch gekennzeichnet,**
**dass** mindestens ein Schalter (27) vorgesehen ist, der eine minimale Distanz (d) zwischen einem Anker (21) des Bremsmagnets (4) und einem Bremsmagnetgehäuse (19) überwacht.

2. Aufzugsantrieb nach Anspruch 1,
**dadurch gekennzeichnet,**
**dass** der Schalter (27) an einem Bremsmagnetstössel (23) angeordnet ist und die Relativbewegung des
Bremsmagnetstössels (23) gegenüber dem Bremsmagnetgehäuse (19) ausführt, wobei der Schalter (27) bei der minimalen Distanz (d) schaltet.

3. Aufzugsantrieb nach Anspruch 1,
**dadurch gekennzeichnet,**
**dass** der Schalter (27) am Anker (21) des Bremsmagnets (4) angeordnet ist und die minimale Distanz (d) zum Bremsmagnetgehäuse (19) detektiert.

4. Aufzugsantrieb nach Anspruch 1,
**dadurch gekennzeichnet,**
**dass** der Schalter (27) am Bremsmagnetgehäuse (19) angeordnet ist und die minimale Distanz (d) zum Anker (21) des Bremsmagnets (4) detektiert.

5. Aufzugsantrieb nach einem der vorhergehenden Ansprüche,
**dadurch gekennzeichnet,**
**dass** beim Unterschreiten der minimalen Distanz (d) der Schalter (27) direkt den Aufzugsantrieb (41,46) abschaltet.

6. Aufzugsantrieb nach einem der vorhergehenden Ansprüche,
**dadurch gekennzeichnet,**
**dass** mindestens ein Bremshebelschalter (40) vorgesehen ist, der die Stellung der Bremshebel (5,6) überwacht.

7. Aufzugsantrieb nach einem der vorhergehenden Ansprüche,
**dadurch gekennzeichnet,**
**dass** ein Schaltglied (47) vorgesehen ist, das ein den Bremsmagnet (4) beaufschlagendes Signal (ST) mit einem Signal (RE) des Bremshebelschalters (40) vergleicht und bei schaltlogischer Ungleichheit ein Fehlersignal (ER) für eine Aufzugssteuerung (42) erzeugt.

8. Aufzug mit einem Aufzugsantrieb gemäss Anspruch 1.

9. Verfahren für den Bau eines Aufzugsantriebes (41,46) mit einer Bremseinrichtung (1), bestehend aus Bremshebel (5,6) mit einer Federkraft beaufschlagenden Druckfedern (2,3),
wobei Bremsbeläge (13,16) an einer Bremstrommel (14) eine Bremskraft erzeugen und mindestens ein Bremsmagnet (4) entgegen der Federkraft die Bremshebel (5,6) lüftet,
**dadurch gekennzeichnet,**
**dass** mindestens ein Schalter (27) zwischen einem Anker (21) des Bremsmagnets (4) und einem Bremsmagnetgehäuse (19) eingebaut wird, welcher Schalter (27) eine minimale Distanz (d) zwischen dem Anker (21) und dem Bremsmagnetsgehäuse (19) überwacht.

10. Verfahren zum Nachrüsten eines Aufzugsantriebes (41,46) mit einer Bremseinrichtung (1), bestehend aus Bremshebel (5,6) mit einer Federkraft beaufschlagenden Druckfedern (2,3),
wobei Bremsbeläge (13,16) an einer Bremstrommel (14) eine Bremskraft erzeugen und mindestens ein Bremsmagnet (4) entgegen der Federkraft die Bremshebel (5,6) lüftet,
**dadurch gekennzeichnet,**
**dass** mindestens ein Schalter (27) an einem Bremsmagnetstössel (23) angebaut wird, welcher Bremsmagnetstössel (23) mit einem Anker (21) des Bremsmagnets (4) verbunden ist, wobei der Schalter (27) die Relativbewegung des Bremsmagnetstössels (23) gegenüber dem Bremsmagnetgehäuse (19) ausführt.

11. Verfahren nach Anspruch 9 oder 10,
**dadurch gekennzeichnet,**
**dass** mit dem Schalter (27) die minimale Distanz (d) zwischen dem Anker (21) des Bremsmagnets (4) und dem Bremsmagnetgehäuse (19) überwacht wird.

## Claims

1. Lift drive (41, 46) with a brake device (1), consisting of brake levers (5, 6) with compression springs (2, 3) exerting a spring force, wherein brake linings (13, 16) generate a braking force at a brake drum (14) and at least one brake magnet (4) releases the brake levers (5, 6) against the spring force,
**characterised in that**
at least one switch (27) monitoring a minimum distance (d) between an armature (21) of the brake magnet (4) and a brake magnet housing (19) is provided.

2. Lift drive according to claim 1, **characterised in that** the switch (27) is arranged at a brake magnet plunger (23) and executes the relative movement of the brake magnet plunger (23) relative to the brake magnet housing (19), wherein the switch (27) switches at the minimum distance (d).

3. Lift drive according to claim 1, **characterised in that** the switch (27) is arranged at the armature (21) of the brake magnet (4) and detects the minimum distance (d) from the brake magnet housing (19).

4. Lift drive according to claim 1, **characterised in that** the switch (27) is arranged at the brake magnet housing (19) and detects the minimum switch distance (d) from the armature (21) of the brake magnet (4).

5. Lift drive according to any one of the preceding claims, **characterised in that** if the minimum distance (d) is fallen below the switch (27) directly switches off the lift drive (41, 46).

6. Lift drive according to any one of the preceding claims, **characterised in that** at least one brake lever switch (40) monitoring the setting of the brake lever (5, 6) is provided.

7. Lift drive according to any one of the preceding claims, **characterised in that** a switch element (47), which compares a signal (ST) acting on the brake magnet (4) with a signal (RE) of the brake lever switch (40) and in the case of circuit-logical inequality generates an error signal (ER) for a lift control (42), is provided.

8. Lift with a lift drive according to claim 1.

9. Method for construction of a lift drive (41, 46) with a brake device (1), consisting of brake levers (5, 6) with compression springs (2, 3) exerting a spring force, wherein brake linings (13, 16) generate a braking force at a brake drum (14) and at least one brake magnet (4) releases the brake levers (5, 6) against the spring force,
**characterised in that**
at least one switch (27) is installed between an armature (21) of the brake magnet (4) and a brake magnet housing (19), which switch (27) monitors a minimum distance (d) between the armature (21) and the brake magnet housing (19).

10. Method of retrofitting a lift drive (41, 46) with a brake device (1), consisting of brake levers (5, 6) with compression springs (2, 3) exerting a spring force, wherein brake linings (13, 16) generate a braking force at a brake drum (14) and at least one brake magnet (4) releases the brake levers (5, 6) against the spring force,
**characterised in that**
at least one switch (27) is attached to a brake magnet plunger (23), which brake magnet plunger (23) is connected with an armature (21) of the brake magnet (4), wherein the switch (27) executes the relative movement of the brake magnet plunger (23) relative to the brake magnet housing (19).

11. Method according to claim 9 or 10, **characterised in that** the minimum distance (d) between the armature (21) of the brake magnet (4) and the brake magnet housing (19) is monitored by the switch (27).

## Revendications

1. Entraînement d'ascenseur (41, 46) avec un dispositif de freinage (1) composé de ressorts de compression (2, 3) qui contraignent des leviers de frein (5, 6) avec une force élastique, étant précisé que des garnitures de frein (13, 16) produisent sur un tambour de frein (14) une force de freinage, et qu'au moins un aimant de frein (4) desserre les leviers de frein (5, 6) à l'encontre de la force élastique,
**caractérisé en ce qu'**il est prévu au moins un commutateur (27) qui surveille une distance minimale (d) entre un induit (21) de l'aimant de frein (4) et un carter d'aimant de frein (19).

2. Entraînement d'ascenseur selon la revendication 1, **caractérisé en ce que** le commutateur (27) est disposé sur un poussoir d'aimant de frein (23) et effectue le mouvement relatif du poussoir d'aimant de frein (23) par rapport au carter d'aimant de frein (19), étant précisé que le commutateur (27) entre en action en présence de la distance minimale (d).

3. Entraînement d'ascenseur selon la revendication 1, **caractérisé en ce que** le commutateur (27) est disposé sur l'induit (21) de l'aimant de frein (4) et détecte la distance minimale (d) par rapport au carter d'aimant de frein (19).

4. Entraînement d'ascenseur selon la revendication 1, **caractérisé en ce que** le commutateur (27) est disposé sur le carter d'aimant de frein (19) et détecte la distance minimale (d) par rapport à l'induit (21) de l'aimant de frein (4).

5. Entraînement d'ascenseur selon l'une des revendications précédentes, **caractérisé en ce que** dans le cas d'une valeur inférieure à la distance minimale (d), le commutateur (27) arrête directement l'entraînement d'ascenseur (41, 46).

6. Entraînement d'ascenseur selon l'une des revendications précédentes, **caractérisé en ce qu'**il est prévu au moins un commutateur de leviers de frein (40), qui surveille la position des leviers de frein (5, 6).

7. Entraînement d'ascenseur selon l'une des revendications précédentes, **caractérisé en ce qu'**il est prévu un organe de commutation (47), qui compare un signal (ST) sollicitant l'aimant de frein (4) à un signal (RE) du commutateur de leviers de frein (40) et qui, en cas d'inégalité en termes de logique de commutation, produit un signal d'erreur (ER) pour une commande d'ascenseur (42).

8. Ascenseur avec un entraînement d'ascenseur selon la revendication 1.

9. Procédé pour la construction d'un entraînement d'ascenseur (41, 46) avec un dispositif de freinage (1) composé de ressorts de compression (2, 3) qui contraignent des levier de frein (5, 6) avec une force élastique, étant précisé que des garnitures de frein (13, 16) produisent sur un tambour de frein (14) une force de freinage, et qu'au moins un aimant de frein (4) desserre les leviers de frein (5, 6) à l'encontre de la force élastique,
**caractérisé en ce qu'**au moins un commutateur (27) est monté entre un induit (21) de l'aimant de frein (4) et un carter d'aimant de frein (19), lequel commutateur (27) surveille une distance minimale (d) entre l'induit (21) et le carter d'aimant de frein (19).

10. Procédé pour moderniser un entraînement d'ascenseur (41, 46) avec un dispositif de freinage (1) composé de ressorts de compression (2, 3) qui contraignent des levier de frein (5, 6) avec une force élastique, étant précisé que des garnitures de frein (13, 16) produisent sur un tambour de frein (14) une force de freinage, et qu'au moins un aimant de frein (4) desserre les leviers de frein (5, 6) à l'encontre de la force élastique,
**caractérisé en ce qu'**au moins un commutateur (27) est ajouté sur un poussoir d'aimant de frein (23), lequel poussoir (23) est relié à un induit (21) de l'aimant de frein (4), étant précisé que le commutateur (27) décrit le mouvement relatif du poussoir d'aimant de frein (23) par rapport au carter d'aimant de frein (19).

11. Procédé selon la revendication 9 ou 10, **caractérisé en ce qu'**avec le commutateur (27), la distance minimale (d) entre l'induit (21) de l'aimant de frein (4) et le carter d'aimant de frein (19) est surveillée.
